# FASCICULE DE BREVET EUROPEEN

(11) **EP 0 613 715 B1**
(45) Date de publication et mention de la délivrance du brevet: **19.08.1998**
(21) Numéro de dépôt: 94400416.7
(22) Date de dépôt: 28.02.1994
(51) Int. Cl.: B01D 53/72, B01D 53/86, B01D 53/04, B01D 3/00

(54) **Procédé de traitement d'air de ventilation contenant du styrène**
Verfahren zur Behandlung von Styrol enthaltender Ventilationsluft
Process for treating styrene containing ventilation air

(30) Priorité: 05.03.1993 FR 9302670
(43) Date de publication de la demande: 07.09.1994
(73) Titulaire: INSTITUT FRANCAIS DU PETROLE, 92502 Rueil-Malmaison (FR)
(72) Inventeur: Morlec, Jean, F-44600 Saint Nazaire (FR); Travers, Christine, F-92500 Rueil Malmaison (FR); Dezael, Claude, F-78600 Maisons Laffitte (FR)

(56) Documents cités:
- EP-A- 0 002 791
- EP-A- 0 003 818
- EP-A- 0 494 550
- EP-A- 0 557 155
- WO-A-92/00793
- DE-U- 9 110 837
- US-A- 3 925 959
- US-A- 4 234 549
- US-A- 4 969 936

## Description

La présente invention concerne un procédé de traitement d'air de ventilation contenant des gaz malodorants et notamment du styrène et est un perfectionnement de la demande de brevet No. 92/01.907 du 18 février 1992.

Le but du procédé selon l'invention est d'éliminer les gaz malodorants, en particulier le styrène responsable de l'insalubrité des locaux de travail et de la pollution atmosphérique. Par voie de conséquence, les dépenses de chauffage pouvant être minimisées, la pollution NOx et COx s'en trouverait réduite également.

Le procédé comprend les étapes successives suivantes:
1. Une étape d'adsorption: dans cette étape, on fait passer dans une enceinte lesdits gaz au travers d'au moins une masse de captation sélective desdits gaz, formée par au moins une zéolithe hydrophobe, afin que ladite substance contenant dans lesdits gaz soit adsorbée par cette zéolithe ; de plus ,cette zéolithe contient du platine et/ou du palladium ou se trouve mélangée avec un catalyseur capable d'initier une combustion catalytique : ainsi la phase de combustion de l'étape suivante 2) est effectuée à l'intérieur de la même enceinte sur zéolithe.
2. Une étape de combustion-désorption : dans cette étape, on fait passer des gaz chauds au travers de ladite zéolithe qui contient les gaz malodorants adsorbés, afin de désorber ladite substance, et de la brûler sur la zéolithe.

L'invention est caractérisée en ce que la zéolithe est enfermée et répartie dans une pluralité de conteneur individuels reliés éventuellement les uns aux autres, ayant chacun une enveloppe fermée, perméable aux gaz et/ou aux liquides et dont les pores sont suffisamment petits pour retenir des matériaux solides granulaires qu'elle renferme (c'est à dire la zéolithe). Chaque conteneur comporte quatre faces sensiblement triangulaires constituant sensiblement un tétraèdre. De préférence chaque conteneur est relié à au moins un conteneur contigu par l'une de ses arêtes par une liaison commune, de préférence par une soudure commune de deux arêtes adjacentes desdits conteneurs contigus.

Généralement chaque conteneur est réalisé en une toile métallique ou toute autre matière équivalente qui a l'avantage de diminuer les pertes de charge.

Compte tenu de l'excellent rapport surface-volume lié en particulier à la forme tétraédrique des conteneurs, ces conteneurs possèdent des qualités particulièrement adaptées au remplissage de colonnes creuses par de la matière granulaire telle que une zéolithe dans le cadre de la présente invention.

Il est en effet bien connu de l'homme du métier qu'un rapport surface-volume particulièrement élevé est favorable à la réaction chimique entre la phase solide contenue dans les conteneurs, dont l'enveloppe externe est poreuse, et la phase extérieure liquide ou gazeuse.

Il est connu par ailleurs qu'il est pratiquement impossible de réaliser, au sein d'une colonne, un empilement totalement compact de tétraèdres réguliers. Or, dans le cas d'emploi d'une série de chaînes de tétraèdres, l'une des supériorités des chaînes de tétraèdres, est la possibilité d'effectuer un remplissage connu, en disposition et répartition, permettant de limiter au maximum la perte de charge existant dans la colonne et d'obtenir une perte de charge inférieure à celle que l'on obtient par un remplissage en vrac de conteneurs non reliés entre eux.

Un arrangement particulièrement avantageux et simple à réaliser est de disposer côte à côte des chaînes ou chapelets de tétraèdres de longueur égale à celle de la colonne à remplir. Cette disposition permet de réaliser des colonnes présentant des taux de remplissage de 0,30 à 0,90 et de préférence de 0,55 à 0,90, c'est-à-dire des taux de vide de 0,70 à 0,10 et de préférence de 0,45 à 0,10.

L'enveloppe perméable utilisée pour fabriquer le conteneur peut être formée à partir de tout matériau solide laissant passer les gaz et/ou les liquides, mais dont les ouvertures ont une taille suffisamment petites pour retenir les grains des matériaux solides granulaires que les conteneurs peuvent renfermer.

Comme matériau, on peut utiliser pour former les enveloppes des conteneurs par exemple un matériau tissé ou non-tissé.

La zéolithe utilisée a été rendue hydrophobe avantageusement par un traitement de désalumination d'une zéolithe naturelle ou de synthèse, de préférence d'une zéolithe naturelle; tout traitement de désalumination connu de l'homme du métier peut être utilisé par exemple un traitement d'acide direct. Cette zéolithe hydrophobe possède de préférence un rapport atomique d'au moins 25, généralement d'au moins 30 et par exemple compris entre 30 et 40. Elle est habituellement choisie dans le groupe formé par la mordénite et la clinoptilolite.

Les gaz chauds utilisés dans l'étape 2) sont introduits dans la zéolithe, en général à une température comprise entre 200 et 350°C. Ce sont généralement des gaz de combustion inertes (par exemple un mélange d'oxydes de carbone, d'oxydes d'azote et d'eau notamment), provenant d'une chaudière et dans laquelle une quantité croissante d'oxygène est ajoutée. Après un certain temps, ces gaz chauds peuvent être constitués d'air chaud. L'étape 2) permet notamment de régénérer la zéolithe utilisée et arrivée à saturation.

L'effluent issu de l'étape 2) peut éventuellement être ensuite soumis à une étape de combustion ultime, généralement à une température supérieure à 800°C, par exemple dans une chaudière qui peut être celle servant à chauffer les gaz utilisés dans l'étape 2) de combustion-désorption.

L'effluent issu de l'étape 2) ou issu de l'étape de combustion ultime (lorsque celle-ci est présente dans le procédé selon l'invention), peut être avantageusement soumis à une étape d'élimination des oxydes de soufre contenus dans ledit effluent. Cette étape est avantageuse lorsque les gaz malodorants et/ou toxiques à traiter contiennent des composés soufrés, par exemple des mercaptans. Elle permet d'abaisser la teneur en oxydes de soufre à une valeur habituellement inférieure à 150 ppm. Elle peut être effectuée selon toute méthode d'élimination des oxydes de soufre connue de l'homme du métier, par exemple selon les méthodes décrites dans les brevets US-A-4 725 417, USA-4 781 903 et US-A-4 855 117 au nom de la demanderesse.

L'effluent issu de l'étape 2) ou issu de l'étape de combustion ultime (lorsque celle-ci est présente dans le procédé selon l'invention) ou issu de l'étape d'élimination des oxydes de soufre (lorsque celle-ci est présente dans le procédé selon l'invention) peut être avantageusement soumis à une étape d'élimination des oxydes d'azote contenus dans ledit effluent. Ces oxydes d'azote proviennent généralement des gaz chauds utilisés lors de l'étape 2) de combustion-désorption. Cette étape d'élimination des oxydes d'azote peut être effectuée selon toutes méthodes connue de l'homme du métier, par exemple par réduction catalytique sélective des oxydes d'azote par l'ammoniac, on peut en particulier, employer la méthode décrite dans la demande de brevet EP-A-0 325 511 au nom de la demanderesse.

Au moins deux lits de zéolithes peuvent être éventuellement disposés alternativement sur le circuit de gaz malodorants et/ou toxiques à traiter. Ainsi, lorsque le premier lit de zéolithe est arrivé à saturation, le courant de gaz malodorants et/ou toxiques est envoyé vers un autre lit de zéolithe : le premier lit de zéolithe peut alors être régénéré sans que le procédé de traitement, soit interrompu.

Le procédé peut également être mis en oeuvre sur deux sites géographiques différents : lorsque la zéolithe utilisée, disposée sur un premier site, est arrivée à saturation après l'étape 1) d'adsorption, elle est remplacée sur ce même site par une autre zéolithe "neuve" et est envoyée vers un second site où s'effectue l'étape 2) de combustion-désorption et éventuellement les autres étapes décrites précédemment. Une fois régénérée, elle peut alors être renvoyée éventuellement sur le premier site afin de remplacer l'autre zéolithe arrivée à saturation. Ainsi, les installations employées dans le procédé selon l'invention ne sont pas nécessairement disposées sur le même site géographique.

## Revendications

1. Procédé de traitement d'air de ventilation contenant des gaz malodorants, en particulier du styréne, comprenant les étapes successives suivantes:
1) Une étape d'adsorption, dans au moins une enceinte dans laquelle lesdits gaz passent au travers d'au moins une masse de captation sélective du styrène formée par au moins une zéolithe hydrophobe, ladite zéolithe contenant du platine et/ou du palladium ou étant mélangée avec un catalyseur capable d'initier une combustion catalytique.
2) Une étape de combustion-désorption, dans laquelle des gaz chauds passent au travers de ladite zéolithe contenant ladite substance, afin de la désorber, et de brûler ladite substance sur ladite zéolithe, le procédé étant caractérisé en ce que ladite zéolithe est enfermée dans une pluralité de conteneurs individuels reliés les uns aux autres, ayant chacun une enveloppe fermée, perméable aux gaz et/ou aux liquides et dont les pores sont suffisamment petits pour retenir des matériaux solides granulaires, chaque conteneur comportant quatre faces sensiblement triangulaires constituant sensiblement un tétraèdre, procédé dans lequel en outre chaque conteneur est relié à au moins un conteneur contigu par l'une de ses arêtes.

2. Procédé selon l'une des revendications 1 dans lequel chaque conteneur est relié à au moins un conteneur contigu par l'une des ses arètes par une soudure commune de deux arêtes adjacentes desdits conteneurs contigus.

3. Procédé selon l'une des revendications 1 et 2 dans lequel l'enveloppe des conteneurs est constituée d'un grillage ou treillis, de préférence métallique, ou d'une surface métallique poreuse.

4. Procédé selon l'une des revendications 1 à 3 dans lequel ladite zéolithe hydrophobe est préparée par désalumination d'une zéolithe naturelle ou de synthèse.

5. Procédé selon la revendication 4 dans lequel ladite zéolithe hydrophobe est préparée par désalumination d'une zéolithe naturelle choisie dans le groupe formé par la mordénite et la clinoptilolite.

6. Procédé selon l'une des revendications 1 à 5 dans lequel ladite zéolithe hydrophobe possède un rapport atomique Si/Al d'au moins 25.

7. Procédé selon l'une des revendications 1 à 6 dans lequel, dans l'étape 2), les gaz chauds sont introduits dans ladite zéolithe à une température comprise entre 200 et 350°C.

## Claims

1. A process for the treatment of ventilation air containing malodorous gases particularly styrene and comprising the following successive steps :
1) An adsorption step, wherein said gases are passed through at least one chamber containing at least one retention mass which is selective to styrene, the retention mass being formed by at least one hydrophobic zeolite, said zeolite containing platinum and/or palladium or being mixed with a catalyst for initiating catalytic combustion,
2) A combustion-desorption step wherein the hot gases are passed over said zeolite containing said substance in order to desorb and burn said substance on said zeolite, the process being characterised in that said zeolite is enclosed in a plurality of individual containers which are connected to each other, each comprising a closed envelope which is permeable to gas and/or liquid and whose pores are sufficiently small to retain granular solids, each container comprising four substantially triangular faces substantially constituting a tetrahedron, each container further being connected to at least one adjacent container by one of its edges.

2. Process according to claim 1 wherein each container is connected to at least one adjacent container by one of its edges by a common weld between two adjacent edges of said adjoining containers.

3. Process according to claim 1 or claim 2, wherein said container envelope is constituted by a grating or lattice, preferably metallic, or a porous metal sheet.

4. Process according to any one of claims 1 to 3, wherein said hydrophobic zeolite is prepared by dealumination of a natural or synthetic zeolite.

5. Process according to claim 4 wherein said hydrophobic zeolite is prepared by dealumination of a natural zeolite selected from the group formed by mordenite and clinoptilolite.

6. Process according to any one of claims 1 to 5, wherein said hydrophobic zeolite has a Si/Al atomic ratio of at least 25.

7. Process according to any one of claims 1 to 6 wherein, in step 2), the hot gases are introduced into said zeolite at a temperature of between 200°C and 350°C.

## Patentansprüche

1. Verfahren zum Behandeln von schlecht riechende Gase, insbesondere Styrol, enthaltende Ventilationsluft, die folgenden Stufen umfassend:
(1) eine Adsorptionsstufe in wenigstens einer Kammer, in der diese Gase durch wenigstens eine für Styrol selektive Einfangmasse strömen, die durch wenigstens einen hydrophoben Zeolith gebildet ist, wobei der Zeolith Platin und/oder Palladium enthält oder mit einem Katalysator, der in der Lage ist, eine katalytische Verbrennung auszulösen, vermischt ist.
(2) eine Stufe der Verbrennung-Desorption, in der heiße Gase durch diesen diese Substanz enthaltenden Zeolith streichen, um ihn zu desorbieren und diese Substanz auf diesem Zeolith zu verbrennen, wobei das Verfahren sich dadurch auszeichnet, daß dieser Zeolith in einer Vielzahl individueller miteinander verbundener Behälter eingeschlossen ist, die je einen geschlossenen Mantel, der für Gase und/oder Flüssigkeiten permeabel ist haben und dessen Poren ausreichend klein sind, um granulatförmige Feststoffmaterialien zurückzuhalten, und jeder Behälter vier im wesentlichen dreieckige Flächen hat, die im wesentlichen ein Tetraeder bilden, Verfahren, bei dem im übrigen jeder Behälter mit wenigstens einem angrenzenden Behälter über eine seiner Kanten verbunden ist.

2. Verfahren nach einem der Ansprüche 1, bei dem jeder Behälter mit wenigstens einem über Wenigstens eine seiner Kanten angrenzenden Behälter durch eine zwei benachbarten Kanten gemeinsame Schweißung dieser angrenzenden Behälter verbunden ist.

3. Verfahren nach einem der Ansprüche 1 und 2, bei dem der Mantel der Behälter gebildet wird durch ein Gitter oder Gittergeflecht, bevorzugt aus Metall oder eine metallische poröse Fläche.

4. Verfahren nach einem der Ansprüche 1 bis 3, bei dem dieser hydrophobe Zeolith gebildet wird durch Entaluminisierung eines natürlichen oder synthetischen Zeoliths.

5. Verfahren nach Anspruch 4, bei dem dieser hydrophobe Zeolith hergestellt wird durch Entaluminisieren eines natürlichen Zeoliths, der gewählt ist aus der durch Mordenit und Clinoptilolit gebildeten Gruppe.

6. Verfahren nach einem der Ansprüche 1 bis 5, bei dem dieser hydrophobe Zeolith ein Atomverhältnis Si/Al von wenigstens 25 besitzt.

7. Verfahren nach einem der Ansprüche 1 bis 6, bei dem in der Stufe 2) die heißen Gase in diesen Zeolith bei einer Temperatur zwischen 200 und 350°C eingeführt werden.
